# EUROPEAN PATENT APPLICATION

(11) **EP 2 352 075 A1**
(43) Date of publication of application: **03.08.2011**
(21) Application number: 09821721.9
(22) Date of filing: 31.07.2009
(51) Int. Cl.: G06F 3/038, G06F 3/033

(54) **PORTABLE INPUT DEVICE AND INPUT METHOD IN PORTABLE INPUT DEVICE**

(30) Priority: 20.10.2008 JP 2008269760
(71) Applicant: Panasonic Corporation, Kadoma-shi Osaka 571-8501 (JP)
(72) Inventor: HATANO, Kouji, Osaka 540-6207 (JP); TATSUKI, Kazuhito, Osaka 540-6207 (JP)
(74) Representative: Grünecker, Kinkeldey, Stockmair & Schwanhäusser Anwaltssozietät
(86) International application number: PCT/JP2009/003669
(87) International publication number: WO 2010/047020

(57) **Abstract**

It is intended to be able to perform an input operation with a simple configuration in which the number of components such as keys or switches is reduced. A remote controller (1) includes an angular velocity detecting section (21) for detecting an angular velocity caused in a casing when a user indicates a specific position of the casing held by the user, an operation determining section (3) for determining the indicated specific position on the basis of the angular velocity detected by the angular velocity detecting section (21), and a control command transmitting section (91) for transmitting a control command to an external device on the basis of the determination result of the operation determining section (30).

## Description

### Technical Field

The present invention relates to a portable input device, and more particularly, to a portable input device on which input is performed by a user indicating a specific position of a casing.

### Background Art

With the recent advancement of semiconductor technology or miniaturization technology, handheld devices that are miniaturized and portable have increased. Mobile phones, which are already ubiquitous as a necessity of daily life, are a representative example. The functions of the mobile phone have been diversified with the increasing popularity thereof. Mobile phones have been increasingly used for various services such as scheduling, e-mail, games, playing music, and One Segment broadcasting reception other than telephone calls. Accordingly, users need to perform an input operation to the mobile phones for various purposes such as character input, menu selection, and game control, in addition to the operation of inputting a phone number.

As a current method of inputting an operation to a mobile phone, an input method using ten keys is widely used, for example, as disclosed in PTL 1. In the input method using ten keys, functions of character input, menu selection, game control, and the like as well as a numerical input function can be performed by sequentially pressing ten buttons arranged on a casing of a mobile phone. Accordingly, even when the functions of a mobile phone are diversified, users can master the functions of the mobile phone well simply by operating the ten buttons. As a result, it is possible to avoid a situation of adding new input portion in which would provide an obstacle to decreasing the thickness and size of a casing of a mobile phone whenever a new function is added to the mobile phone.

### Citation List

[PTL 1] JP-A-2001-274880

### Summary of the Invention

### Technical Problem

However, when keys are arranged on the casing surface like the portable radio equipment described in PTL 1, the ratio at which the keys occupy the size of the casing is great and types of switches have to be disposed inside the casing. Accordingly, the decreases in thickness and size of the casing are limited.

On the other hand, when the number of keys is reduced to reduce the number of components, it is possible to decrease the thickness and size of the casing. However, the key arrangement becomes different from the key arrangement with which users are familiar and thus the users may feel uncomfortable in the input operation.

The invention is made to solve the above-mentioned problem and a goal thereof is to provide a portable input device that can perform an input operation with a simple structure in which components such as keys or switches are eliminated by predicting an input from a movement of a user's finger.

### Solution to Problem

To accomplish the above-mentioned purpose, according to an aspect of the invention, there is provided a portable input device that is held by a user, comprising: a displacement detecting section that detects a displacement of a casing caused when the user indicates a specific position on the casing held by the user; and an operation determining section that determines the specific position on the basis of the displacement detected by the displacement detecting section and outputs a determination result.

According to this configuration, since the user's operation of moving the finger holding the casing to press a specific position on the casing can be detected by the displacement of the casing and the specific position can be determined, it is possible to perform an input operation with a simple structure in which components such as keys or switches are removed.

The portable input device may further include a reference position detecting section that detects that a predetermined reference position on the casing is indicated, and the operation determining section may determine the specific position on the basis of a detection result by the reference position detecting section and the displacement detected by the displacement detecting section after the reference position is indicated.

According to this configuration, since the displaced state of the casing when the reference position of the casing is indicated is set as a start point and the specific position which the user intends to press can then be determined on the basis of the subsequent displacement of the casing, it is possible to perform an input operation with a simple structure in which components such as keys or switches are removed and to suppress the accumulation of displacement detection errors due to the continuous movement of a finger, thereby determining a specific position with higher accuracy.

In the portable input device, the operation determining section determines that the determination result before the reference position is indicated is invalid when the reference position detecting section detects that the reference position is indicated.

According to this configuration, when the determination result by the operation determining section is different from the user's intention, that is, only when the determination result by the operation determining section is invalid, the accumulation of displacement detection errors can be reset. Accordingly, the operation of indicating the reference position can be set to the minimum movement, thereby efficiently performing the input operation.

In the portable input device, the operation determining section may determine the specific position on the basis of the displacement detected by displacement detecting section and a table in which displacement and specific positions are correlated with each other.

According to this configuration, it is possible to absorb the irregular determination due to a difference in the casing holding method, a difference in hand or finger shape, a difference in operation habit, and the like by changing the table, thereby providing a portable input device that can be flexibly applied to every use scenario.

According to another aspect of the invention, there is provided an input method in a portable input device that is held by a user, including: a first step of detecting a displacement of a casing caused when the user indicates a specific position on the casing held by the user; a second step of determining the specific position on the basis of the displacement detected in the first step; and a third step of outputting a determination result.

According to this method, since the user's operation of moving the finger while holding the casing to press a specific position on the casing can be detected by the displacement of the casing and the specific position can be determined, it is possible to perform an input operation with a simple structure in which components such as keys or switches are removed.

### Advantageous Effects of the Invention

According to the above-mentioned aspects of the invention, by detecting the user's operation of moving the finger while holding the casing to press a specific position of the casing on the basis of the displacement of the casing and determining the specific position, it is possible to provide a portable input device that can perform an input operation with a simple structure in which components such as keys or switches are removed, thereby further decreasing the thickness and size of a portable device.

### Brief Description of the Drawings

Fig. 1 is a diagram schematically illustrating the configuration of a remote controller according to a first embodiment of the invention.
Fig. 2 is a diagram illustrating the detailed configuration of the remote controller according to the first embodiment of the invention.
Figs. 3(a) and 3(b) are diagrams illustrating the appearance of the remote controller according to the first embodiment of the invention.
Figs. 4(a), 4(b), and 4(c) are diagrams illustrating operations of the remote controller according to the first embodiment of the invention.
Figs. 5(a) and 5(b) are diagrams illustrating the behavior of the remote controller according to the first embodiment of the invention.
Fig. 6 is a first flow diagram illustrating the flow of processes in the operation determining section according to the first embodiment of the invention.
Fig. 7 is a second flow diagram illustrating the flow of processes in the operation determining section according to the first embodiment of the invention.
Figs. 8(a) and (b) are diagrams illustrating the behavior of the operation determining section according to the first embodiment of the invention.
Fig. 9 is a diagram schematically illustrating the configuration of a mobile phone according to a second embodiment of the invention.
Fig. 10 is a diagram illustrating the detailed configuration of the mobile phone according to the second embodiment of the invention.
Fig. 11 is a diagram illustrating the appearance of the mobile phone according to the second embodiment of the invention.
Fig. 12 is a diagram illustrating details of displacement patterns according to the second embodiment of the invention.
Fig. 13 is a diagram illustrating details of a determination table according to the second embodiment of the invention.
Fig. 14 is a first flow diagram illustrating the flow of processes in the operation determining section according to the second embodiment of the invention.
Fig. 15 is a second flow diagram illustrating the flow of processes in the operation determining section according to the second embodiment of the invention.

### Description of Embodiments

Hereinafter, exemplary embodiments of the invention will be described with reference to the accompanying drawings. In the drawings used to describe the exemplary embodiments, like elements are referenced by like reference signs and repeated description will not be made.

### (First Embodiment)

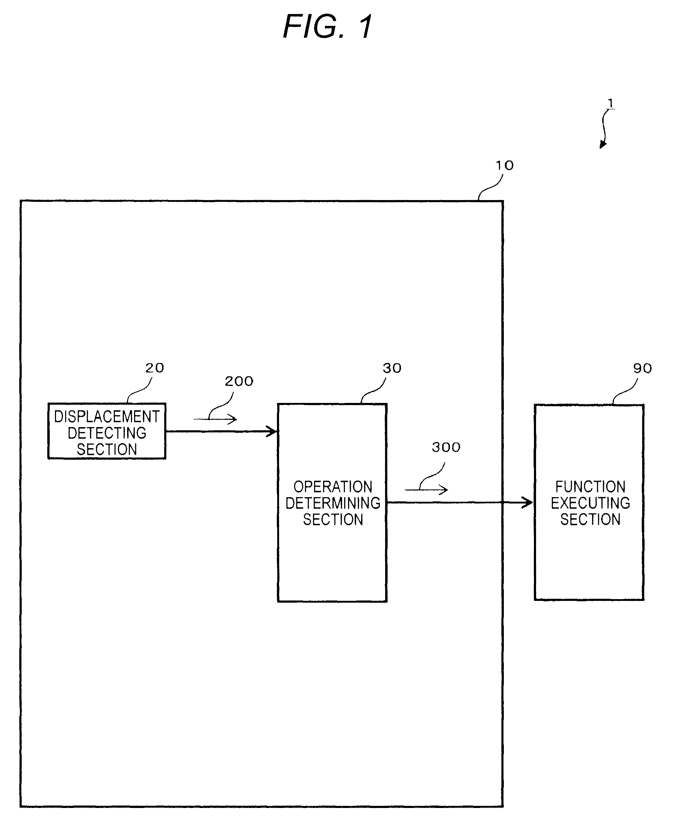

Fig. 1 is a diagram schematically illustrating the configuration of a remote controller 1 according to a first embodiment of the invention. In Fig. 1, the remote controller 1 includes a portable input device 10 and a function executing section 90. The portable input device 10 includes a displacement detecting section 20 and an operation determining section 30.

The displacement detecting section 20 detects a displacement of a casing caused when a user indicates a specific position of the casing of the remote controller 1 in a state where the remote controller 1 is held by the user, and outputs a displacement detection result 200. The operation determining section 30 determines the specific position of the casing indicated by the user on the basis of the displacement detection result 200 output from the displacement detecting section 20 and outputs a first determination result 300. The function executing section 90 executes the function indicated by the user on the basis of the first determination result 300 output from the operation determining section 30.

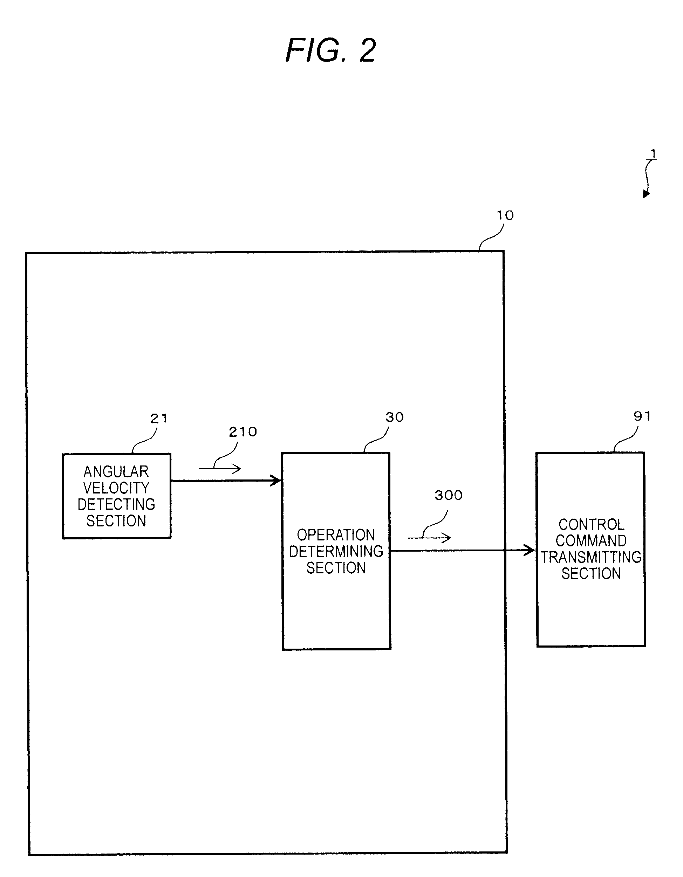

Fig. 2 is a diagram illustrating the detailed configuration of the remote controller 1 according to the first embodiment of the invention. In Fig. 2, the remote controller 1 includes an angular velocity detecting section 21 and a control command transmitting section 91 as the displacement detecting section 20 and the function executing section 90 shown in Fig. 1, respectively.

The angular velocity detecting section 21 detects an angular velocity caused in the casing when the user indicates a specific position of the casing of the remote controller 1 in the state where the remote controller 1 is held by the user, and outputs an angular velocity detection result 210. The control command transmitting section 91 transmits a control command for controlling an external device as a control target of the remote controller 1 to the external device on the basis of the first determination result 300.

The angular velocity detecting section 21 is made up of an angular velocity sensor that detects the angular velocity using mechanical inertia or optical interference. The operation determining section 30 includes a CPU (Central Processing Unit) that calculates the angular velocity detection result and a memory that stores the angular velocity detection result or the calculation result. The control command transmitting section 91 includes an infrared LED (Light Emitting Diode) or an IC (Integrated Circuit) that controls the emission of the infrared LED.

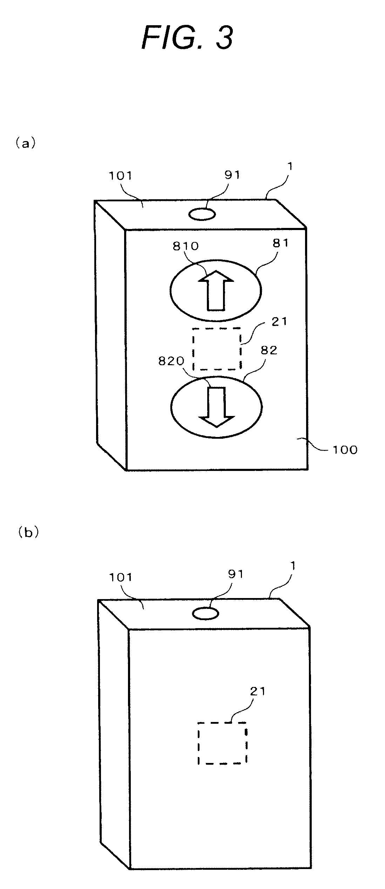

Fig. 3 is a diagram illustrating the appearance of the remote controller 1 according to the first embodiment of the invention. Fig. 3(a) is a diagram illustrating the appearance of the remote controller 1 as viewed from the front side of an operation surface 100 and Fig. 3(b) is a diagram illustrating the appearance of the remote controller 1 as viewed from the back side of the operation surface 100. As shown in Fig. 3(a), a first mark 810 and a second mark 820 are drawn on the surface of the casing of the remote controller 1 so as to allow a user to recognize a first specific position 81 and a second specific position 82. The first mark 810 provides a position to be indicated by the user at the time of outputting a control command "upper" to the external device and the second mark 820 provides a position to be indicated by the user at the time of outputting a control command "lower" to the external device.

The angular velocity detecting section 21 is disposed inside the casing of the remote controller 1 and detects the angular velocity resulting from the displacement of the casing of the remote controller 1. The control command transmitting section 91 is disposed on a top surface 101 of the remote controller 1 and transmits a control command based on the indication of the user to the external device.

As can be seen from Figs. 3(a) and 3(b), the remote controller 1 according to the first embodiment of the invention does not include keys or switches for detecting the user's indication.

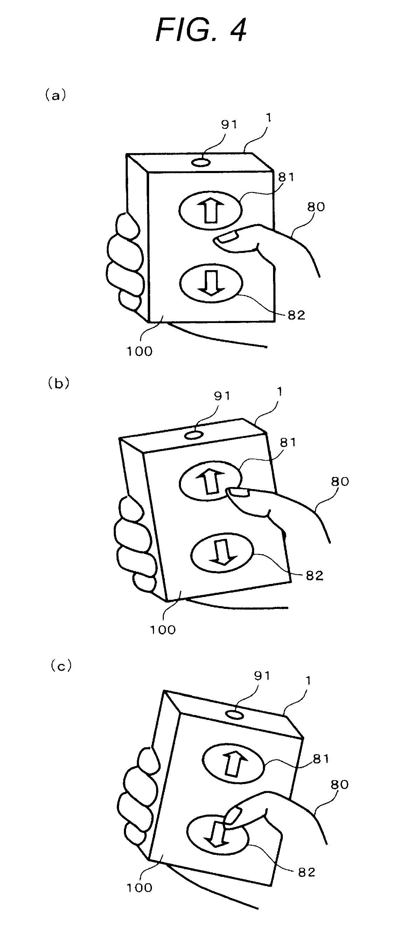

Fig. 4 is a diagram illustrating an exemplary operation on the remote controller 1 according to the first embodiment of the invention. In Figs. 4(a) to 4(c), the user indicates the specific positions 81 and 82 by moving a finger 80 upward and downward while holding the remote controller 1 with a right hand.

Fig. 4(a) shows a state where no operation is performed by the user with the remote controller 1 held with the right hand. The finger 80 does not indicate any of the first specific position 81 and the second specific position 82. Fig. 4(b) shows a state where the finger 80 is going to indicate the first specific position 81. It can be seen from the drawing that the casing of the remote controller 1 slightly rotates in the counterclockwise direction as viewed from the operation surface 100. On the other hand, Fig. 4(c) shows a state where the finger 80 is going to the second specific position 82, contrary to Fig. 4(b). It can be seen from the drawing that the casing of the remote controller 1 slightly rotates in the clockwise direction as viewed from the operation surface 100.

In this way, when the user is going to indicate a specific position of the casing with the finger while holding the remote controller 1, it can be seen that the user's hand unconsciously displaces the casing of the remote controller 1 to assist the movement of the finger (or along with the movement of the finger). It can also be seen that the method of displacing the casing with the user's hand varies depending on what position of the casing the user intends to indicate. In the invention, as described above, the displacement of the casing resulting from the deformation or movement of the hand caused when the user indicates a specific position of the casing with the finger is detected and it is determined what position of the casing the user intends to indicate on the basis of the detection result.

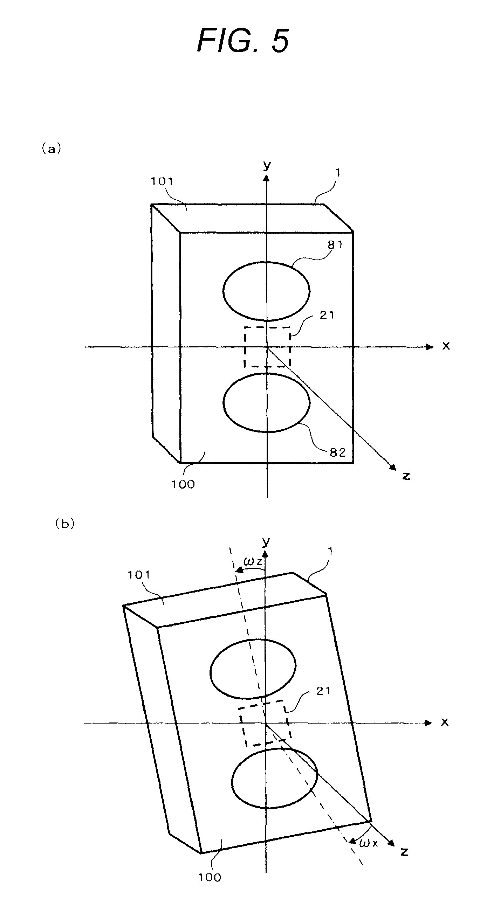

Fig. 5 is a diagram illustrating the displacement of the casing of the remote controller 1 according to the first embodiment of the invention in more detail. In this specification, as shown in Fig. 5(a), an axis perpendicular to the operation surface 100 of the remote controller 1 is defined as a Z axis, an axis perpendicular to the top surface 101 of the casing among the axes perpendicular to the Z axis is defined as a y axis, and an axis perpendicular to the y axis and the z axis is defined as an x axis. As shown in Fig. 5(b), the angular velocity around the Z axis is defined as ωz and the angular velocity around the x axis is defined as ωx.

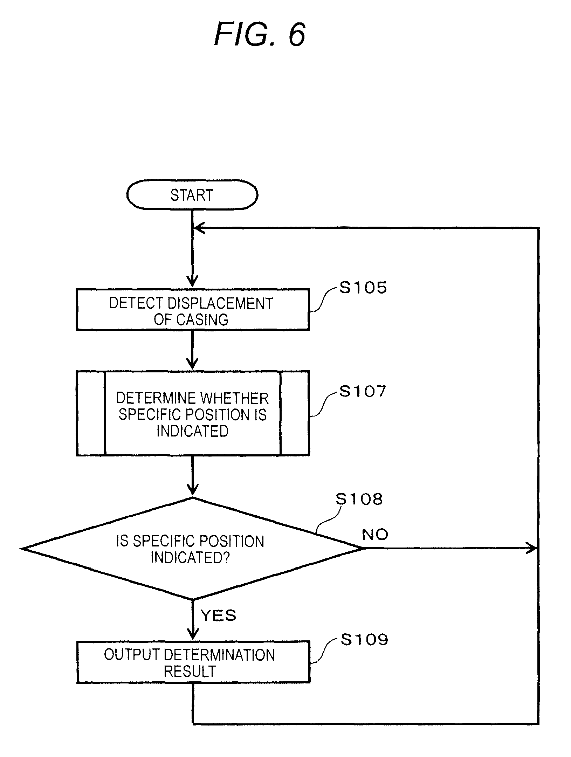

Fig. 6 is a flow diagram illustrating the flow of processes in the operation determining section 30 of the remote controller 1 according to the first embodiment of the invention. First, the operation determining section 30 acquires the angular velocity detection result 210 detected by the angular velocity detecting section 21 (step S105). The operation determining section 30 determines whether the displacement of the casing is based on an indication of a specific position on the basis of the angular velocity detection result 210 acquired in step S105 (step S107). The operation determining section 30 branches the flow of processes depending on whether the indication of the specific position is determined in step S107 (step S108). When it is determined in step S107 whether the displacement is based on the indication of the specific position (YES in step S108), the operation determining section 30 performs the process of step S109. When it is determined in step S107 that the displacement is not based on the indication of the specific position (NO in step S108), the operation determining section 30 performs the process of step S105. Finally, the operation determining section 30 outputs the specific position determined in step S107 as a first determination result 300 (step S109).

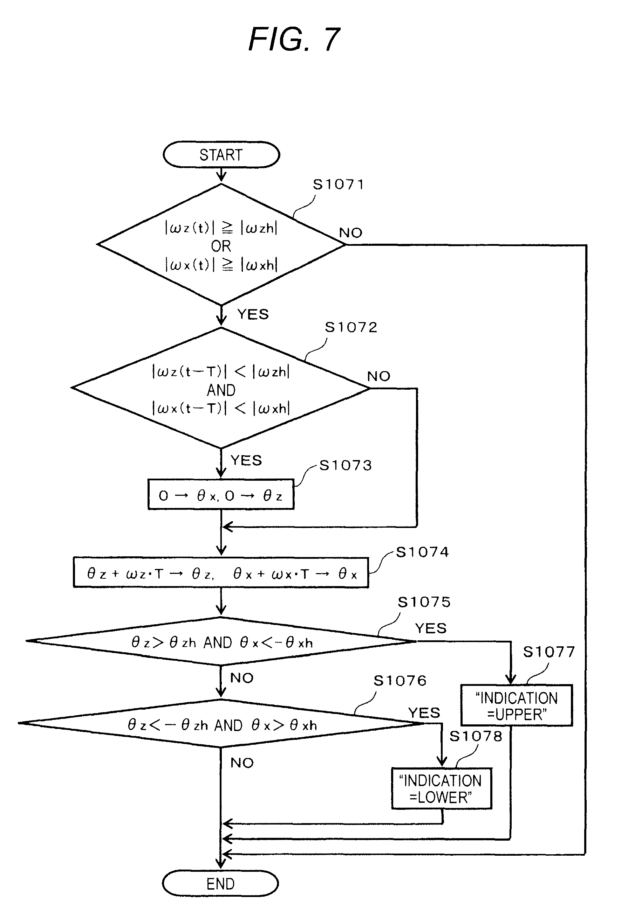

Fig. 7 is a flow diagram more specifically illustrating the flow of processes the process (step S107 in Fig. 6) of determining whether the displacement of the casing is based on the indication of the specific position in the flow of processes of the operation determining section 30 of the remote controller 1 according to the first embodiment of the invention. In the flow of processes shown in Fig. 7, t represents the time when the angular velocity detecting section 21 finally detects the angular velocity and T represents the period with which the angular velocity detecting section 21 detects the angular velocity.

First, the operation determining section 30 branches the flow of processes depending on whether the casing of the remote controller 1 is displaced at a predetermined speed or more (step S1071). That is, the operation determining section 30 takes the absolute values of the angular velocities (ωz(t), ωx(t)) included in the angular velocity detection result 210 and checks whether the absolute values are equal to or greater than the absolute values of predetermined angular velocities (ωzh, ωxh). When it is determined that the absolute values of several angular velocities are equal to or greater than the absolute values of the predetermined angular velocities (YES in step S1071), the operation determining section 30 performs the process of step S1072. When it is determined that all the absolute values of the angular velocities are less than the absolute values of the predetermined angular velocities (NO in step S1071), the operation determining section 30 determines that the displacement is not based on the indication of a specific position and performs the process of step S108 in Fig. 6.

The operation determining section 30 branches the flow of processes depending on whether it is just after the casing of the remote controller 1 starts the displacement at a predetermined velocity or higher (step S1072). That is, the operation determining section 30 checks whether the absolute values of the previous angular velocities (ωz(t-T), ωx(t-T)) included in the angular velocity detection result 210 are less than the predetermined angular velocities (ωzh, ωxh). When the absolute values of all the angular velocities are less than the absolute values of the predetermined angular velocities (YES in step S1072), the operation determining section 30 determines that it is just after the casing of the remote controller 1 starts the displacement at a predetermined velocity or higher and performs the process of step S1073. When any of the absolute values of the previous angular velocities is equal to or greater than the absolute values of the predetermined angular velocities (NO in step S1072), the operation determining section 30 determines that the casing of the remote controller 1 is being displaced at the predetermined velocity or higher and performs the process of step S1074. When it is determined in step S1072 that it is just after the casing of the remote controller 1 starts the displacement at the predetermined velocity or higher (YES in step S1072), the operation determining section 30 initializes the values of displacement angles (θx, θz) to calculate the displacement angles after the casing of the remote controller 1 starts the displacement (step S1073).

In step S1074, the operation determining section 30 updates the values of displacement angles (θx, θz) of the casing of the remote controller 1 using the angular velocities (ωz(t), ωx(t)) and the period T included in the angular velocity detection result 210.

In steps S1075 to S1076, the operation determining section 30 determines whether the displacement of the casing is based on the indication of a specific position on the basis of the displacement angle of the casing of the remote controller 1. First, the operation determining section 30 compares the displacement angle θz with a predetermined displacement angle θzh and determines whether the casing of the remote controller 1 is displaced in the counterclockwise direction as viewed from the operation surface 100. The operation determining section 30 compares the displacement angle θx with a predetermined displacement angle θxh and determines whether the upper part of the casing of the remote controller 1 is displaced in a back-falling direction as viewed from the operation surface 100 (step S1075). When the determination result in step S1075 is YES, the operation determining section 30 determines that the displacement of the casing is based on the indication of the first specific position 81 (step S1077).

When the determination result in step S1075 is NO, the operation determining section 30 compares the displacement angle θz with the predetermined displacement angle θzh and determines whether the casing of the remote controller 1 is displaced in the clockwise direction as viewed from the operation surface 100. The operation determining section 30 compares the displacement angle θx with the predetermined displacement angle θxh and determines whether the upper part of the casing of the remote controller 1 is displaced in a front-falling direction as viewed from the operation surface 100 (step S1076). When the determination result in step S1076 is YES, the operation determining section 30 determines that the displacement of the casing is based on the indication of the second specific position 82 (step S1078). When the determination result in step S1076 is NO, the operation determining section 30 determines that the displacement of the casing is not based on the user's indication and performs the process of step S108 in Fig. 6.

As described above, the operation determining section 30 determines whether the displacement of the casing is based on the indication of a specific position depending on whether the casing of the remote controller 1 is displacement by a predetermined displacement while keeping a predetermined velocity or higher. The operation determining section 30 determines of what position the displacement of the casing is based on the indication on the basis of the direction in which the casing of the remote controller 1 is displaced when plural specific positions exist.

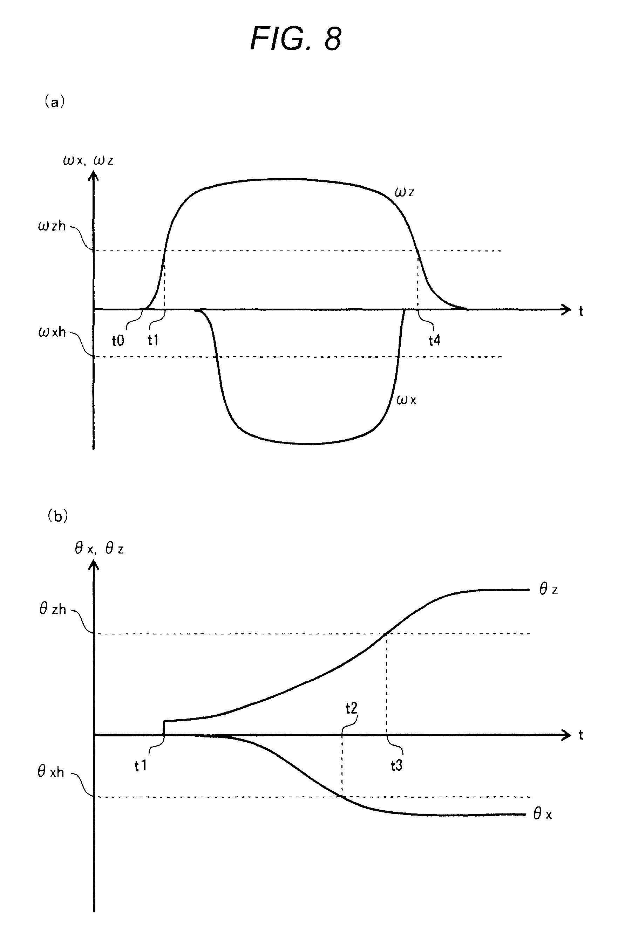

Fig. 8 is a diagram illustrating an example of the angular velocity detection result 210 output from the angular velocity detecting section 21 of the remote controller 1 according to the first embodiment of the invention. Fig. 8(a) shows temporal changes of the angular velocity ωz and the angular velocity ωx detected by the angular velocity detecting section 21 from the state where the user does not perform any operation as shown in Fig. 4(a) to the state where the user indicates the first specific position 81 to reach the state shown in Fig. 4(b). Fig. 8(b) shows temporal changes of the displacement angle θz and the displacement angle θx of the remote controller 1 from the state shown in Fig. 4(a) to the state shown in Fig. 4(b). Here, the displacement angle θz and the displacement angle θx are the values calculated in step S1074 of the flow of processes shown in Fig. 7 on the basis of the angular velocity ωz and the angular velocity ωx shown in Fig. 6(a). The behavior of the remote controller 1 according to the first embodiment of the invention will be described with reference to Figs. 6, 7, and 8.

First, at time t0 shown in Fig.8 (a), the angular velocity detecting section 21 detects the angular velocity of the casing of the remote controller 1 and outputs the angular velocity detection result 210, and the operation determining section 30 acquires the angular velocity detection result 210 (step S105 of Fig. 6). The operation determining section 30 determines whether the displacement of the casing is based on the indication of a specific position (step S107). Since all the absolute values of the acquired angular velocities ωz(t) and ωx(t) are less than the absolute values of the predetermined angular velocities (ωzh, ωxh), the determination result in step S1071 of Fig. 7 is NO and the operation determining section 30 performs the process of step S108 of Fig. 6. Since it is not determined that the displacement of the casing is based on the indication, the determination result in step S108 is NO, and the operation determining section 30 does not output the first operation determination result 300 and performs the process of step S105.

At time t1 shown in Fig. 8(a), when the absolute value of the angular velocity ωz detected by the angular velocity detecting section 21 reaches the predetermined angular velocity ωzh, the determination result in step S1071 of Fig. 7 is YES and the operation determining section 30 performs the process of step S1072. Since both the absolute value of the previous angular velocity ωz(t-T) and the absolute value of the previous angular velocity ωx(t-T) are less than the absolute values of the predetermined angular velocities (ωzh, ωxh), the determination result in step S1072 is YES, and the operation determining section 30 performs the process of step S1073 and initializes the values of the displacement angles θx and θz.

After time t1 shown in Fig. 8(b), the operation determining section 30 repeatedly performs the processes shown in Figs. 6 and 7. Since the determination results in steps S1075 and S1076 are NO until the displacement of the remote controller 1 reaches a predetermined displacement, that is, up to time t3 (Fig. 8(b)) when the displacement angle θz is equal to or greater than the predetermined displacement angle θzh and the displacement angle θx is equal to or less than the predetermined displacement angle θxh, the operation determining section 30 determines that the displacement of the casing is not based on the indication of a specific position (NO in step S108 of Fig. 6) and does not output the first determination result 300 in step S109.

At time t3 shown in Fig. 8(b), since the displacement of the casing of the remote controller 1 reaches the predetermined displacement and the determination result in step S1075 of Fig. 7 is YES, the operation determining section 30 determines that the user intends to indicate the first specific position 81 (see Fig. 5) (step S1077 of Fig. 7). Since the determination result in step S108 of Fig. 6 is YES, the operation determining section outputs "indication=upper" corresponding to the first specific position 81 as the first determination result 300 in step S109.

The period from time t3 shown in Fig. 8(b) to time t4 shown in Fig. 8(a) is a period of time where the user is moving the finger with the intention to indicate the first specific position 81 (Fig. 5) and the displacement of the casing of the remote controller 1 is increasing at the predetermined velocity or higher. In the period of time (from time t3 to time t4), the determination result in step S1075 of Fig. 7 is YES and thus the operation determining section 30 repeatedly outputs "indication=upper" as the determination result 300 whenever performing the processes shown in Fig. 6. Thereafter, when the user ends the movement for indicating the first specific position 81 (Fig. 4(b) and the angular velocity ωz is less than the predetermined angular velocity ωzh (at time t4 shown in Fig. 8(a)), the determination result in step S1071 of Fig. 7 is NO and the determination result in step S108 of Fig. 6 is NO. Accordingly, the operation determining section 30 stops the outputting of "indication=upper".

Subsequently, when it is detected that the outputting of "indication=upper" included in the first determination result 300 is stopped, the control command transmitting section 91 shown in Fig. 2 determines that the user ends the indication of the first specific position 81 and transmits the control command "upper" to the external device.

As described above, the remote controller 1 according to the first embodiment of the invention detects the angular velocity caused in the casing when the user indicates a specific position of the casing held by the user and outputs the angular velocity detection result 210, and the operation determining section 30 determines the specific position on the basis of the angular velocity included in the angular velocity detection result 210 and outputs the determination result 300.

According to the above-mentioned configuration, since the user's operation of moving the finger holding the casing to press a specific position of the casing is detected by the use of the angular velocity of the casing and the specific position can be determined, it is possible to perform an input operation with a simple configuration in which components such as keys or switches are eliminated.

According to the above-mentioned configuration, since the components such as keys or switches need not be disposed at the position to be indicated by the user at the time of performing an input operation, positions where other components such as a battery cover, an LED (Light Emitting Diode), and a microphone not associated with the input operation are disposed can be used for the input operation, thereby more effectively utilizing the surface of the casing.

According to the above-mentioned configuration, since the user's operation can be determined on the basis of the displacement of the casing caused unconsciously with the user's movement of moving the finger holding the casing to press a specific position of the casing, the user need not newly know special operations and can perform the input operation with the same sense as operating keys or buttons with which the user is familiar.

When the displacement velocity of the casing does not reach a predetermined velocity, the remote controller 1 according to the first embodiment of the invention determines that the displacement of the casing is not based on the indication of a specific position (step S1071 of Fig. 7). According to the flow of processes, it is possible to suppress the influence of a fine displacement of the casing of the remote controller 1 due to any reason other than the user's operation or noise output from the displacement detecting section and to accurately determine the operation.

In the remote controller 1 according to the first embodiment of the invention, the control command transmitting section 91, that is, the function executing section 90, performs a process of transmitting a control command to the external device at the time when the indication of a specific position is ended (at time t4 in Fig. 8(a)), but the invention is not limited to this configuration. By using as a trigger the event that the operation determining section 30 determines that the displacement of the casing is based on the indication of a specific position (at time t3 in Fig. 8(b)) or the event that a predetermined time passes after the operation determining section 30 determines that the displacement of the casing is based on the indication of a specific position, the control command transmitting section 91, that is, the function executing section 90, may perform the process. Accordingly, since the behavior of the device can be started or ready before the user's operation is ended, it is possible to improve the response of the device.

In the remote controller 1 according to the first embodiment of the invention, the operation determining section 30 determines whether the user indicates the first specific position 81 or the second specific position 82 with the finger (steps S1075 and S1076 in Fig. 7), but the invention is not limited to this configuration. The operation determining section may further determine whether the user returns the finger having moved to the specific position to the original position. Accordingly, since the end of the pressing can be detected in addition to the pressing of the specific position, it is possible to determine a long press, for example, by measuring the period of time when a specific position is being pressed, thereby improving the convenience.

### (Second Embodiment)

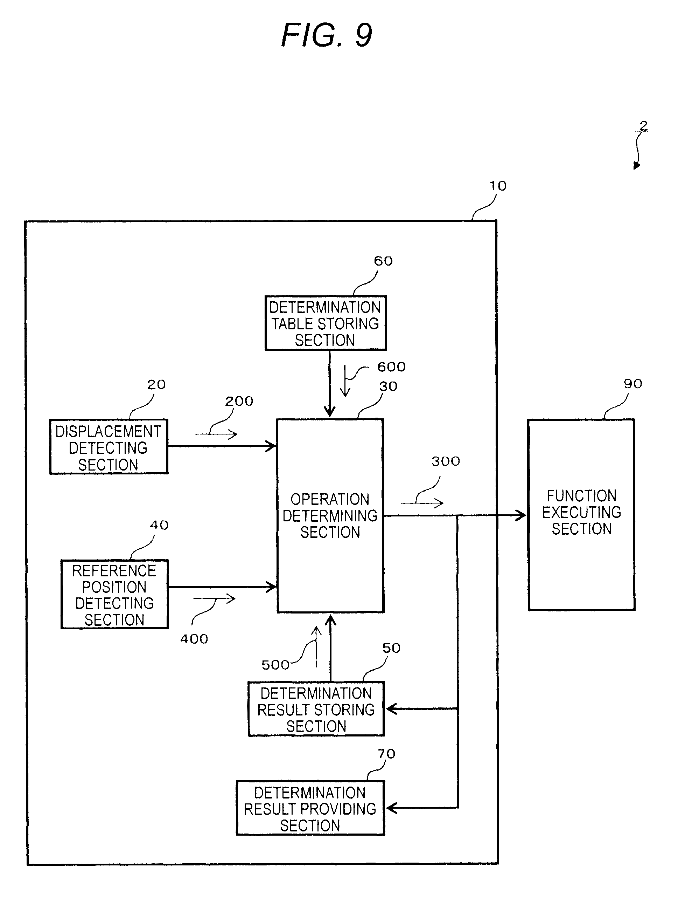

Fig. 9 is a diagram schematically illustrating the configuration of a mobile phone 2 according to a second embodiment of the invention. In Fig. 9, a portable input device 10 includes a reference position detecting section 40, a determination result storing section 50, a determination table storing section 60, and a determination result providing section 70 in addition to the configuration of the portable input device shown in Fig. 1. The operation determining section 30 determines a specific position of a casing indicated by the user on the basis of a reference position detection result 400 output from the reference position detecting section 40 and a second determination result 500 output from the determination result storing section 50. The operation determining section 30 determines a specific position of the casing indicated by the user with reference to a determination table 600 stored in the determination table storing section 60.

The reference position detecting section 40 detects that a predetermined reference position of the casing of the mobile phone 2 is indicated and outputs the reference position detection result 400. The determination result storing section 50 temporarily stores the determination result of the operation determining section 30 on the basis of the first determination result 300 and outputs the stored determination result as the second determination result 500 for the purpose of the next determination of the operation determining section 30. The determination table storing section 60 stores the determination table 600 in which the displacements of the casing of the mobile phone 2 are correlated with the specific positions of the casing. The determination result providing section 70 provides the user of information representing a specific position which the operation determining section 30 determines that the user indicates, on the basis of the first determination result 300.

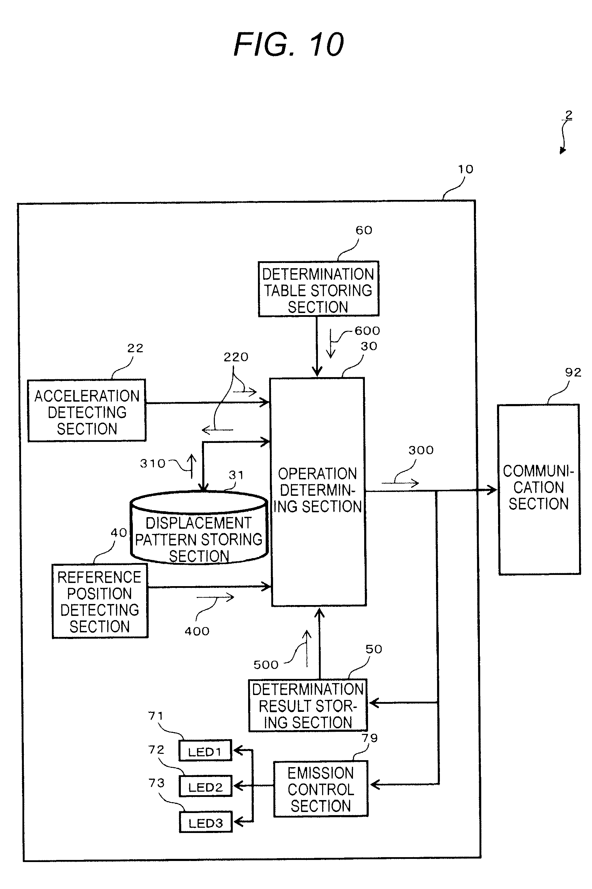

Fig. 10 is a diagram illustrating the detailed configuration of the mobile phone 2 according to the second embodiment of the invention. Fig. 10, the mobile phone 2 includes an acceleration detecting section 22 as the displacement detecting section 20 in Fig. 9. The mobile phone 2 shown in Fig. 10 includes a communication section 92 as the function executing section 90 shown in Fig. 9. The mobile phone 2 shown in Fig. 10 includes an emission control section 79, a first LED 71, a second LED 72, and a third LED 73 as the determination result providing section 70 shown in Fig. 9. The mobile phone 2 shown in Fig. 10 includes displacement pattern storing section 31.

The acceleration detecting section 22 detects an acceleration caused in the casing when the user indicates a specific position of the casing of the mobile phone 2 in the state where the mobile phone 2 is held by the user, and outputs an acceleration detection result 220. The communication section 92 performs a communication process with a phone line on the basis of the first determination result 300. The displacement pattern storing section 31 generates and stores a displacement pattern 310 representing the temporal changes of the displacement of the casing of the mobile phone 2. The displacement pattern 310 is generated by the operation determining section 30 on the basis of the acceleration detection result 220. The emission control section 79 controls one of the first LED 71, the second LED 72, and the third LED 73 to emit light on the basis of the first determination result 300, so that the user can recognize the specific position indicated by the user.

The acceleration detecting section 22 includes 3-axis acceleration sensor that detects an acceleration using mechanical, electrical, and optical properties. The reference position detecting section 40 is made up of a button disposed to detect that a reference position of the casing is indicated. The determination result storing section 50, the determination table storing section 60, and the displacement pattern storing section 31 are made up of a memory or the like.

The first LED 71, the second LED 72, and the third LED 73 are made up of an LED (Light Emitting Diode) emitting visible light. The emission control section 79 is made up of driver software driving the LEDs.

In this specification, it is assumed that the acceleration detecting section 22 outputs as the acceleration detection result 220 an acceleration obtained by removing a gravitational acceleration component from the acceleration detected by the 3-axis acceleration sensor or the like.

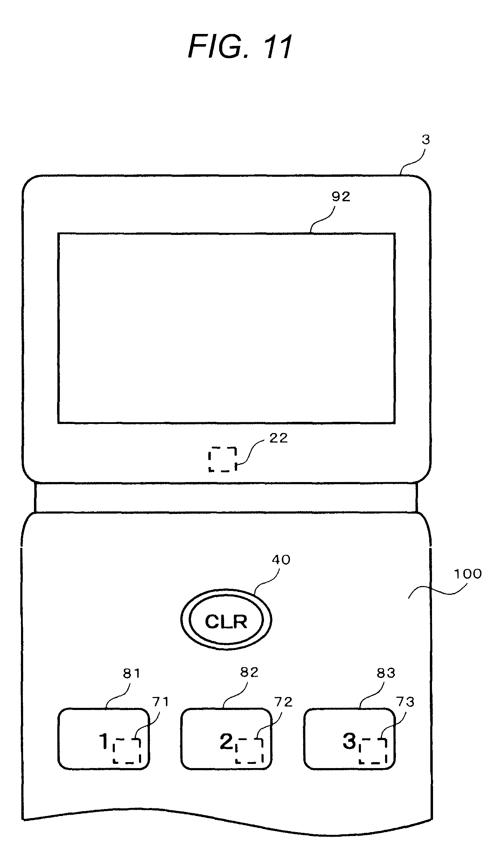

Fig. 11 is a diagram illustrating the appearance of the mobile phone 2 according to the second embodiment of the invention. In the mobile phone 2 shown in Fig. 11, the lower part of the casing is not illustrated for the purpose of simplifying the explanation. As shown in Fig. 11, the reference position detecting section 40 is disposed on the operation surface 100 of the casing of the mobile phone 2. A mark "CLR" is drawn on the surface of the reference position detecting section 40. The mark "CLR" serves as an indicator used for the reference position detecting section 40 to notify that the previous determination result by the operation determining section 30 is erroneous and the input is invalid.

The operation surface 100 of the mobile phone 2 includes the first LED 71, the second LED 72, and the third LED 73 at positions corresponding to the first specific position 81, the second specific position 82, and the third specific position 83. On the other hand, the upper casing of the mobile phone 2 includes a liquid crystal display on which a phone number and the like are displayed in the communication section 92. The acceleration detecting section 22 is disposed inside the upper casing of the mobile phone 2.

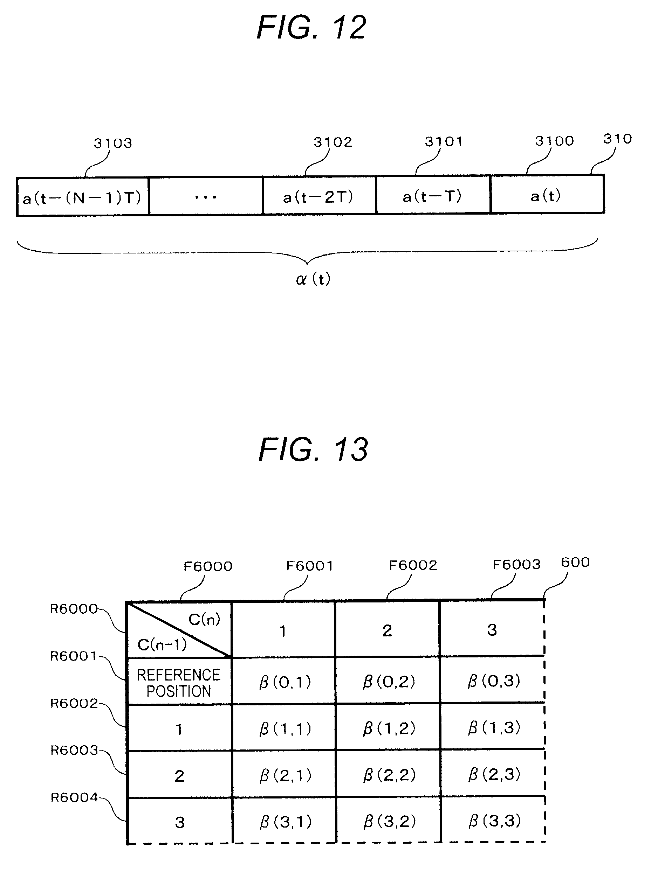

Fig. 12 is a diagram illustrating the structure of the displacement pattern 310 of the mobile phone 2 according to the second embodiment of the invention. As shown in Fig. 12, the displacement pattern 310 is expressed as an arrangement including N cells of cell 3100 to cell 3103. Here, a(t) (cell 3100) is a value (vector value) of an acceleration detected by the acceleration detecting section 22 at time t. In addition, a(t-T) (cell 3101) is a value of an acceleration detected by the acceleration detecting section 22 at the time previous to time t by period T. Similarly, cell 3102 and cell 3103 are values of accelerations detected by the acceleration detecting section 22 at the times different by period T.

That is, the displacement pattern 310 represents neighboring N values (vectors) sampled every period T among the accelerations due to the displacement of the mobile phone 2 in time series, that is, represents the recent temporal change of the acceleration due to the displacement of the mobile phone 2. In this specification, the displacement pattern 310 at time t is expressed by α(t). N is determined in such a manner that the temporal change of the acceleration due to the displacement of the mobile phone 2 can be determined for each user's indication, that is, that the displacement time NxT is sufficiently large.

Fig. 13 is a diagram illustrating the details of the determination table 600 stored in the determination table storing section 60 of the mobile phone 2 according to the second embodiment of the invention. In Fig. 13, the determination table 600 includes five records of record R6000 to record R6004. Each record of the determination table 600 includes four fields of field F6000 to field F6003. "Reference position", "1", "2", and "3" of field F6000 in the determination table 600 represent the user's previous operations (hereinafter, referred to as "C(n-1)").

Here, the "reference position" represents that the user indicates the reference position detecting section 40. "1" represents that the user indicates the first specific position 81. Similarly, "2" and "3" represent that the user indicates the second specific position 82 and the third specific position 83, respectively.

"1 ", "2", and "3" of record R6000 in the determination table 600 represent the user's current operations (hereinafter, referred to as "C(n)").

Standard patterns (hereinafter, referred to as "standard displacement patterns") of the displacement pattern 310 when the user indicates a specific position or the reference position of the casing of the mobile phone 2 and then subsequently indicates the same or different specific positions are stored in the range of fields F6001 to F6003 of records R6001 to R6004 in the determination table 600. For example, β(1, 2) stored in field F6002 of record R6002 is a standard displacement pattern when the user indicates the first specific position 81 ("indication=1 ") and then indicates the second specific position 82 ("indication=2"). The individual standard displacement patterns are stored in the determination table 600 in the same data format as the displacement pattern 310 shown in Fig. 12.

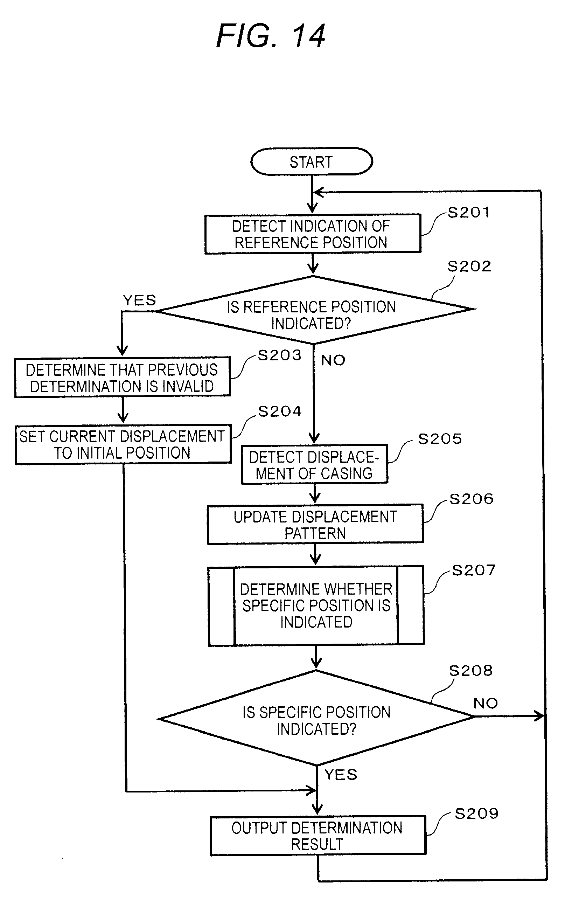

Fig. 14 is a flow diagram illustrating the flow of processes in the operation determining section 30 of the mobile phone 2 according to the second embodiment of the invention. First, the operation determining section 30 acquires the reference position detection result 400 and checks whether the reference position detecting section 40 detects the indication of the reference position (step S201). Then, the operation determining section 30 branches the flow of processes on the basis of the determination result in step S201 (step S202). When it is determined that the reference position detecting section 40 detects the indication of the reference position (YES in step S202), the operation determining section 30 performs the process of step S203. When it is determined that the reference position detecting section 40 does not detect the indication of the reference position (NO in step S202), the operation determining section 30 performs the process of step S205.

When it is determined that the reference position detecting section 40 detects the indication of the reference position (YES in step S202), the operation determining section 30 determines that the previous determination result is invalid and sets the "reference position" as the determination result (step S203). Subsequently, the operation determining section 30 initializes the displacement detection state of the casing of the mobile phone 2 by clearing the details of the displacement pattern 310 (step S204) and then performs the process of step S209.

On the other hand, in step S205, the operation determining section 30 acquires the acceleration detection result 220 and updates the displacement pattern 310 by storing the value a(t) of the acceleration included in the acceleration detection result 220 in the displacement pattern storing section 310 (step S206). Subsequently, the operation determining section 30 determines whether the displacement of the casing of the mobile phone 2 is based on the indication of a specific position (step S207), performs the process of step S209 when it is determined that the displacement is based on the indication of a specific position (YES in step S208), and performs the process of step S201 when it is determined that the displacement is not based on the indication of a specific position (NO in step S208).

In step S209, the operation determining section 30 outputs the determination result (one of "1", "2", "3", and "reference position") as the first determination result 300 (step S209).

When the operation determining section 30 outputs the first determination result 300 in step S209, the determination result storing section 50 stores the output first determination result 300. The emission control section 79 recognizably provides the specific position determined by the operation determining section 30 by controlling the LED (one of the first LED 71, the second LED 72, and the third LED 73) disposed at the positions corresponding to the determination result to emit light for a predetermined time on the basis of the first determination result 300.

When the operation determining section 30 outputs the determination result as the first determination result 300 in step S209, the communication section 92 acquires the first determination result 300. When the determination result is one of "1", "2", and "3", the communication section displays the number corresponding to the determination result as the input result of a destination phone number on the screen of the communication section 92 shown in Fig. 11. On the other hand, when the determination result included in the first determination result 300 is the "reference position", the communication section 92 determines that the previously-input numerical value is invalid and erases the last number of the phone number displayed on the screen of the communication section 92.

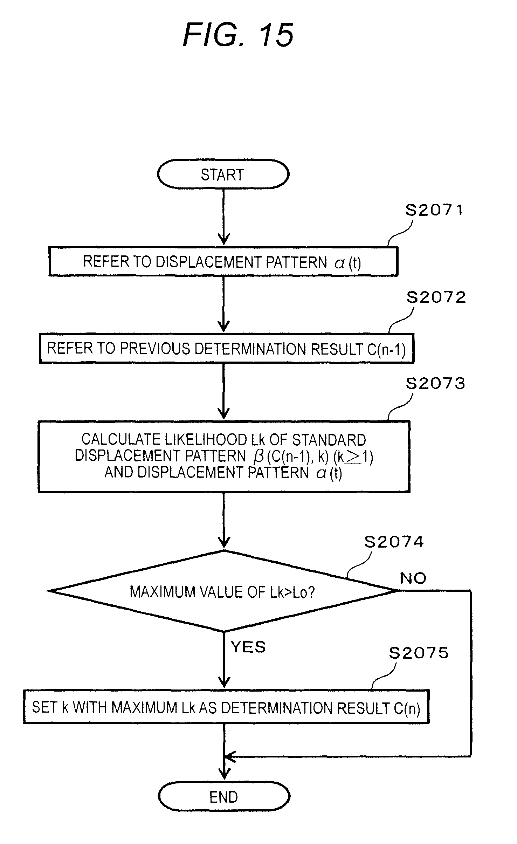

Fig. 15 is a flow diagram illustrating the detailed flow of processes (step S207 in Fig. 14) of determining whether the displacement of the casing is based on the indication of a specific position in the flow of processes in the operation determining section of the mobile phone 2 according to the second embodiment. First, the operation determining section 30 acquires the newest displacement pattern 310 (α(t)) from the displacement pattern storing section 31 (step S2071) and acquires the second determination result 500 from the determination result storing section 50 to refer to the previous determination result C(n-1) (step S2072).

The operation determining section 30 calculates the likelihood Lk of the standard displacement pattern β(C(n-1), k) (where k=1, 2, 3) and α(t) stored in the determination table 600 stored in the determination table storing section 60 (step S2073). Then, the operation determining section 30 checks whether the maximum value of the likelihood Lk is greater than a predetermined likelihood Lo (step S2074). When it is determined that the maximum value of the likelihood Lk is greater than the predetermined likelihood Lo (YES in step S2074), the operation determining section 30 sets the k with the maximum Lk as the current determination result C(n) (step S2075).

That is, the operation determining section 30 determines the current indication on the basis of the user's previous indication (C(n-1)) and the displacement (α(t)) of the casing of the mobile phone 2 caused after the user's previous indication. At this time, the operation determining section 30 determines what specific position is indicated by the current indication by determining to what standard displacement pattern (β) the displacement (α(t)) of the casing of the mobile phone 2 is similar.

The method of calculating the likelihood of data series is already proposed and known in the technical fields of pattern recognition such as voice recognition (for example, a DP matching method), and thus is not be described herein.

As described above, in the mobile phone 2 according to the second embodiment of the invention, the operation determining section 30 determines a specific position on the basis of the displacement detected by the displacement detecting section 20 and the current determination result.

According to the above-mentioned configuration, even when the user sequentially indicates plural specific positions, it is possible to determine the specific position indicated by the user.

The mobile phone 2 according to the second embodiment of the invention includes the reference position detecting section 40, the operation determining section 30 that determines a specific position indicated by the user on the basis of the displacement detected by the displacement detecting section 20 after the reference position detecting section 40 is indicated.

According to this configuration, when the reference position is indicated, the operation determining section 30 can reset the displacement pattern of the casing detected previously (step S204 of Fig. 14), detect the displacement of the casing using as a trigger the state where the reference position is newly indicated, and determine the indication. Accordingly, when the user sequentially indicates plural specific positions, it is possible to prevent the displacement detection error from being accumulated and thus to determine the user's indication with higher accuracy.

In the mobile phone 2 according to the second embodiment of the invention, when the reference position detecting section 40 is indicated, the operation determining section 30 determines that the previous determination result is invalid.

According to the above-mentioned configuration, when the determination result of the operation determining section 30 is different from the user's intention, the previous determination result can be invalidated with one indication and the displacement detection error can be reset, thereby performing an efficient input operation.

In the mobile phone 2 according to the second embodiment of the invention, the operation determining section 30 determines the specific position on the basis of the displacement pattern detected by the displacement detecting section 20 and the determination table 600 in which the displacement patterns and the specific positions are correlated with each other.

According to the above-mentioned configuration, since the irregular determination due to a difference in the casing holding method, a difference in hand or finger's shape, a difference in operation habit, and the like can be absorbed by changing the determination table 600, the mobile phone can be flexibly applied to every use scenario.

The mobile phone 2 according to the second embodiment of the invention includes the determination result providing section 70 that provides the determination result of the operation determining section 30.

According to this configuration, since it can be fed back to the user as what the operation determining section 30 determines the displacement of the casing due to the user's indication, it is possible to reduce the user's discomfort that the operation is erroneously determined. The user can learn how to accurately operate the mobile phone for a short time.

In the mobile phone 2 according to the second embodiment of the invention, as shown in Fig. 11, the reference position detecting section 40 is disposed such as manner that the directions of the vectors with the reference position detecting section 40 as a start point and the specific positions as an end point are different for the specific positions. For example, the vector directed to the first specific position 81 from the reference position detecting section 40 and the vector directed to the third specific position 83 from the reference position detecting section 40 are different from each other in direction by 90 degrees or more.

According to this arrangement, since the displacement pattern of the casing caused when the user moves the finger from the reference position to a specific position varies for each specific position, the error when the operation determining section 30 determines the specific position is reduced, thereby more accurately determining the user's indication.

The displacement detecting section in the embodiments of the invention detects the angular velocity or the acceleration of the casing, but any property may be detected as long as it can detect a parameter representing the displacement of the casing. For example, a displacement velocity, a displacement distance, or an angular acceleration may be detected.

It has been described in the above-mentioned embodiments of the invention that the angular velocity sensor and the acceleration sensor are used as the displacement detecting section, but the invention is not limited to this configuration. For example, the displacement of the casing may be detected by acquiring an external image of the casing by the use of an image sensor or the relative displacement from a particular casing attached to the casing, such as a strap, may be detected. Alternatively, sound waves or electromagnetic waves may be emitted to the outside of the casing and the displacement of the casing may be detected on the basis of the reflected waves, or the displacement of the casing may be detected on the basis of the electrostatic capacitance between the casing and an object outside the casing.

It has been described in the above-mentioned embodiments of the invention that the specific positions are arranged on the same surface of the casing, but the invention is not limited to this configuration. Plural specific positions may be arranged on different surfaces.

It has been described in the above-mentioned embodiments of the invention that the operation determining section always perform the determining process on the basis of the detection result by the displacement detection section, but the determining process of the operation determining section may be stopped in a predetermined time after a specific position is indicated. According to this configuration, it is possible to prevent a disadvantage that the displacement of the casing not resulting from the input operation is erroneously recognized as the input operation. In this case, when the determining process of the operation determining section is released from the stopped state with the indication of the reference position as a trigger, the user should necessarily indicate the reference position as the start point of the displacement detection at the first time of the input operation, whereby the operation determining section can accurately determine the user's indication after starting the input operation.

It has been described in the second embodiment of the invention that the reference position detecting section is made up of a button or the like, but any means such as mechanical means, electrical means, electrostatic means, or optical means may be used to detect the reference position as long as it can detect the indication of the reference position. It has been described that the reference position detecting section is located on the same surface of the casing as the specific positions, but the invention is not limited to this configuration. The reference position detecting section may be located on the surface of the casing other than the specific positions. In this case, when the reference position detecting section is disposed at a position which can be easily indicated with the same finger as the finger indicating the specific positions, it is possible to prevent the situation where the operation determining section erroneously determines the specific position due to the user's indication of the reference position with another finger, whereby the invention can be suitably implemented.

It has been described in the second embodiment of the invention that the operation determining section determines that the previous determination result is invalid when the reference position is indicated, but it may not be determined that the previous determination result is invalid when the reference position is indicated in a predetermined time after a specific position is indicated. According to this configuration, for example, when the user once stops the operation and then indicates the reference position so as to restart the operation, it is possible to prevent such a disadvantage that the operation determining section erroneously determines that the previous determination result is invalid.

It has been described in the second embodiment of the invention that the operation determining section outputs the "reference position" representing that the reference position is indicated as the determination result when it is determined that the previous determination result is invalid, but a symbol other than the "reference position" output when the reference position is indicated may be output.

It has been described in the second embodiment of the invention that the determination result providing section provides the determination result by lighting the position corresponding to the indicated specific position, but any method may be employed as long as it can allow the user to recognize the indicated specific position. For example, an identifier of a specific position may be displayed at a predetermined position on the casing or the indicated specific position may be represented by an arrow or the like displayed on a predetermined position on the casing. According to this configuration, since a component for providing the determination result need not be disposed for each specific position, it is possible to further reduce the size of the casing. By providing the determination result using means such as vibration or sound other than light, the user may recognize the determination result without watching the indicated position.

The method of changing the determination table has not been described in the second embodiment of the invention, but the determination result may be changed on the basis of the result obtained by detecting how the user holds the casing by the use of a sensor such as an optical sensor or a contact sensor included in the casing. The reference position detecting section may be disposed at two or more different positions on the casing, it may be determined how the user holds the casing on the basis of what reference position detecting section is indicated, and the determination table may then be changed. According to this configuration, the user need not suffer from the trouble that the user should manually change the determination table whenever changing the holding of the casing. A method of determining how the user holds the casing on the basis of displacement features of the casing may be considered.

It has been described in the above-mentioned embodiments of the invention that the operation determining section determines a specific position on the basis of the predetermined displacement conditions of the casing or the likelihood of the displacement of the casing and the standard displacement, but the invention is not limited to this configuration. For example, a specific position may be determined from the displacement of the casing using a neural network or the like (for example, multi-layered perceptron). The correlation between the displacements of the casing and the specific positions may be learned by using the user's indication of the reference position (the indication representing the determination result is erroneous) as a negative reinforcement signal.

It has been described in the above-mentioned embodiments of the invention that the invention is applied to the remote controller and the mobile phone, but the invention is not limited to these examples. The invention may be applied to any electronic apparatus as long as a user can perform an input operation by indicating a specific position of a casing in the state where it is held by the user.

While the invention has been described specifically with reference to the embodiments, it will be apparent to those skilled in the art that the invention can be modified in various forms without departing from the spirit and scope of the invention.

This application is based on Japanese Patent Application (Japanese Patent Application No. 2008-269760), filed on October 20, 2008, contents of which are incorporated herein by reference.

### Industrial Applicability

The portable input device according to the invention can provide an advantage of performing an input operation with a simple structure in which components such as keys or switches are removed and can be usefully used as an input device on which input is performed by a user holding the input device.

### Reference Signs List

- 1:: REMOTE CONTROLLER
- 10:: PORTABLE INPUT DEVICE
- 100:: OPERATION SURFACE
- 101:: TOP SURFACE
- 2:: MOBILE PHONE
- 20:: DISPLACEMENT DETECTING SECTION
- 200:: DISPLACEMENT DETECTION RESULT
- 21:: ANGULAR VELOCITY DETECTING SECTION
- 210:: ANGULAR VELOCITY DETECTION RESULT
- 22:: ACCELERATION DETECTING SECTION
- 220:: ACCELERATION DETECTION RESULT
- 30:: OPERATION DETERMINING SECTION
- 300:: FIRST DETERMINATION RESULT
- 31:: DISPLACEMENT PATTERN STORING SECTION
- 310:: DISPLACEMENT PATTERN
- 3100,3101,3102,3103:: CELL
- 40:: REFERENCE POSITION DETECTING SECTION
- 400:: REFERENCE POSITION DETECTION RESULT
- 50:: DETERMINATION RESULT STORING SECTION
- 500:: SECOND DETERMINATION RESULT
- 60:: DETERMINATION TABLE STORING SECTION
- 600:: DETERMINATION TABLE
- 70:: DETERMINATION RESULT PROVIDING SECTION
- 71:: FIRST LED
- 72:: SECOND LED
- 73:: THIRD LED
- 79:: EMISSION CONTROL SECTION
- 80:: FINGER
- 81:: FIRST SPECIFIC POSITION
- 810:: FIRST MARK
- 82:: SECOND SPECIFIC POSITION
- 820:: SECOND MARK
- 83:: THIRD SPECIFIC POSITION
- 90:: FUNCTION EXECUTING SECTION
- 91:: CONTROL COMMAND TRANSMITTING SECTION
- 92:: COMMUNICATION SECTION

## Claims

1. A portable input device that is held by a user, comprising:
a displacement detecting section that detects a displacement of a casing caused when the user indicates a specific position on the casing held by the user; and
an operation determining section that determines the specific position on the basis of the displacement detected by the displacement detecting section and outputs a determination result.

2. The portable input device according to claim 1, further comprising:
a reference position detecting section that detects that a predetermined reference position on the casing is indicated,
wherein the operation determining section determines the specific position on the basis of a detection result by the reference position detecting section and the displacement detected by the displacement detecting section after the reference position is indicated.

3. The portable input device according to claim 2, wherein the operation determining section determines that the determination result before the reference position is indicated is invalid when the reference position detecting section detects that the reference position is indicated.

4. The portable input device according to claim 1, wherein the operation determining section determines the specific position on the basis of the displacement detected by displacement detecting section and a table in which displacement and specific positions are correlated with each other.

5. An input method in a portable input device that is held by a user, comprising:
a first step of detecting a displacement of a casing caused when the user indicates a specific position on the casing held by the user;
a second step of determining the specific position on the basis of the displacement detected in the first step; and
a third step of outputting a determination result.
